# EUROPEAN PATENT APPLICATION

(11) **EP 1 550 988 A2**
(43) Date of publication of application: **06.07.2005**
(21) Application number: 04030986.6
(22) Date of filing: 29.12.2004
(51) Int. Cl.: G07F 17/32

(54) **Gaming machine having software verification**

(30) Priority: 30.12.2003 US 748489
(71) Applicant: WMS Gaming Inc, Waukegan, Illinois 60085 (US)
(72) Inventor: Loose, Timothy C., Chicago IL 60656 (US)
(74) Representative: Grünecker, Kinkeldey, Stockmair & Schwanhäusser Anwaltssozietät

(57) **Abstract**

A gaming machine adapted to authenticate the contents of a media device (memory device) by sampling a number of memory locations in the media device. A hash function is applied to the contents of the sampled memory locations thereby calculating a key-value. The key-value is compared to a previously calculated key. If the key-value and the key are equal, then the media device is considered authentic.

## Description

### FIELD OF THE INVENTION

The present invention relates generally to gaming machines, and more particularly, to software authentication of programs running in a gaming machine.

### BACKGROUND OF THE INVENTION

As a regulatory requirement in virtually all jurisdictions that allow gaming, it is necessary to have a technique for authenticating the software installed in a gaming machine. In the past, gaming manufacturers have generally used EPROM-based hardware platforms to store program code. As a result, a number of software authentication techniques have been accepted as standards throughout the gaming industry. Depending upon the preferences of the local regulatory agency, these techniques generally include either a Kobetron signature or a hash function based on the data stored in the EPROM device.

Authentication of software programs occurs using one of two different methods in the field. The method use is determined by the local regulatory agency. In one method, each EPROM is authenticated by a gaming agent prior to installation in a gaming machine. The EPROMs may be shipped directly to the gaming agency for authentication prior to being installed in the machine, or may be authenticated on the casino floor as software is installed in the machine. In another method, authentication is conducted on a spot-check basis; a gaming agent periodically visits a casino and randomly picks machines to test for having authentic software components.

Jurisdictional requirements require that storage media containing code or data is authenticated at power-up, continuously, periodically, or upon an occurrence of predetermined events. The predetermined events may include opening any doors or panels of the gaming device that allow access to internal circuitry. The storage media may be comprised of erasable programmable read-only memory devices (EPROMs), electrically erasable programmable read-only memory devices (EEPROMs), PROMs, CompactFlash storage cards, hard disk drives, CD drives, or substantially any non-volatile memory and in some cases volatile memory (e.g., NVRAM, specialty mask semiconductors, battery backed RAM, SRAM, DRAM, etc.). Storage media generally comprises a memory device and the data stored thereon. Authentication of storage media is controlled by the gaming device's central processing unit (CPU). However, presently authentication by the CPU may take more than several minutes due to the ever increasing complexity of gaming software and the enlarging size of the storage media.

For example, the authenticity of numerous storage devices associated with the CPU may need to be determined every so often while a gaming machine is running. In some cases, gaming authorities require that a gaming program be authenticated about every ten minutes while the gaming machine is running. To determine the authenticity of a memory device's contents the CPU must read the memory device and perform various calculations and comparisons to determine whether the memory device's contents are authentic. Reading many memory devices or large memory devices can use significant CPU time and therefore may negatively impact the responsiveness of the gaming program that a user interacts with. What is needed is a technique for authenticating memory devices associated with a gaming machine that does not affect the gaming program that the user interacts with.

### BRIEF SUMMARY OF THE INVENTION

Embodiments of the present invention provide a gaming machine with a capability of authenticating data stored in a media device by sampling the contents of the media device's memory locations while performing a hash calculation on the memory contents. The hash calculation is used to update a key-value related to the sampled memory location. After all sampling of memory locations is complete, the calculated key-value is compared with a stored key. If the calculated key-value is equal to the stored key then the contents of the media device is considered authenticated.

An exemplary embodiment of the present invention provides a gaming machine adapted to authenticate a media device. An address pointer, ADDR, is set to a first memory location to be sampled in the media device. A hashing algorithm is applied to the contents of the first memory location in order to update a key-value. The hashing function may be an SHA-1 algorithm. A predetermined number N is added to the address pointer, ADDR, such that ADDR=ADDR+N. The address pointer, points to the next memory location to be sampled at address ADDR and the hashing algorithm is applied to the memory contents of the next memory location thereby updating the key-value. The process of adding N to the address pointer and applying the hashing algorithm to the next memory location is repeated until no more memory locations are to be read in the media device. Then, the calculated key-value is compared with a previously calculated and stored key. If the key-value is equal to the key, the media device is said to be authenticated. Otherwise the media device cannot be authenticated and the gaming machine is halted.

In another exemplary embodiment of a gaming machine that authenticates a media device, a number of memory locations in a media device are sampled in a determined, organized fashion. Upon sampling each memory location, a hash calculation is performed on the memory contents thereby updating a key-value. After the sampling of memory locations is completed, a final key-value is compared with a previously calculated key. If the key-value and the key are equivalent, then the media device is considered to be authenticated; otherwise operation of the gaming machine is halted.

### BRIEF DESCRIPTION OF THE DRAWINGS

A more complete understanding of the method and apparatus of embodiments of the invention may be obtained by reference to the following Detailed Description of Exemplary Embodiments of the Invention when taken in conjunction with the accompanying Drawings wherein:
FIGURE 1 is an exemplary isometric view of a gaming machine operable to conduct a wagering game;
FIGURE 2 is an exemplary block diagram of a gaming machine that uses a run-time authentication technique;
FIGURE 3 is a flow chart for a run-time authentication technique for a gaming machine;
FIGURE 4 is a flow chart for an exemplary sampled verification technique for a gaming machine;
FIGURE 5 is another flow chart for another exemplary sampled verification technique for a gaming machine; and
FIGURE 6 is a third flow chart for another exemplary sampled verification technique for a gaming machine.

### DETAILED DESCRIPTION OF EXEMPLARY EMBODIMENTS OF THE INVENTION

The present invention will now be described more fully hereinafter with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

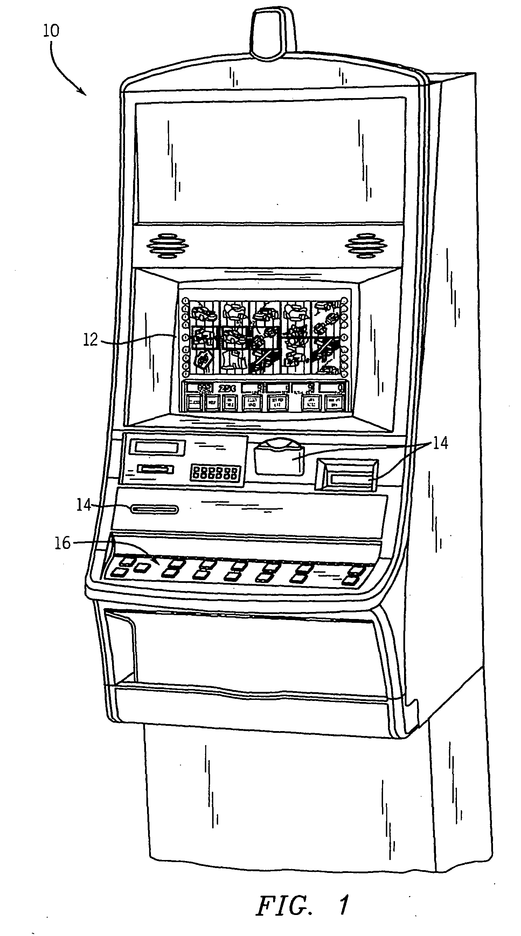

Turning now to the drawings and referring initially to FIGURE 1, a gaming machine 10 is operable to conduct a wagering game such as mechanical or video slots, poker, keno, bingo, or blackjack. If based in video, the gaming machine 10 includes a video display 12 such as a cathode ray tube (CRT), liquid crystal display (LCD), plasma, or other type of visual display known in the art. A touch screen preferably overlies the display 12. In the illustrated embodiment, the gaming machine 10 is an "upright" version in which the display 12 is oriented vertically relative to a player. Alternatively, the gaming machine may be a "slant-top" version in which the display 12 is slanted at about a thirty-degree angle toward the player. Various gaming machine configurations are presently known in the art.

The gaming machine 10 includes a plurality of possible credit receiving mechanisms 14 for receiving credits to be used for placing wagers in the game. The credit receiving mechanisms 14 may, for example, include a coin acceptor, a bill acceptor, a ticket reader, and a card reader. The bill acceptor and the ticket reader may be combined into a single unit. The card reader may, for example, accept magnetic cards and smart (chips) cards coded with money or designating an account containing money.

The gaming machine 10 includes a user interface comprising a plurality of push-buttons 16, the above-noted touch screen, and other possible devices. The plurality of push-buttons 16 may, for example, include one or more "bet" buttons for wagering, a "play" button for commencing play, a "collect" button for cashing out, a "help" button for viewing a help screen, a "pay table" button for viewing the pay table(s), and a "call attendant" button for calling an attendant. Additional game-specific buttons may be provided to facilitate play of the specific game executed on .the machine. The touch screen may define touch keys for implementing many of the same functions as the push-buttons. Other possible user interface devices include a keyboard and a pointing device such as a mouse or trackball.

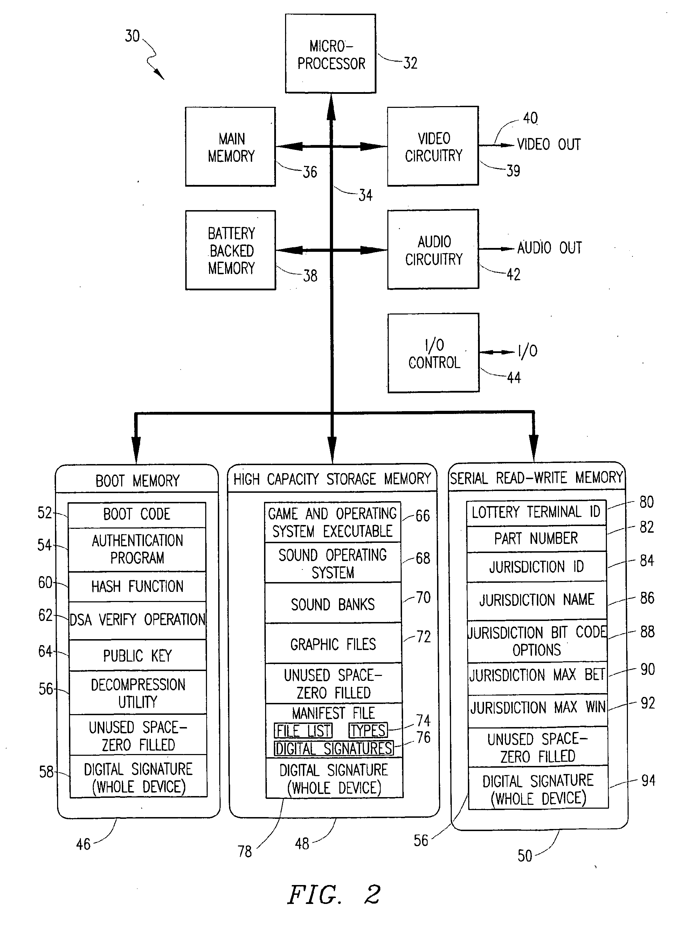

Referring now to FIGURE 2, a central processing unit (CPU) 30 controls operation of the gaming machine 10. In response to receiving a wager and a command to initiate play, the CPU 30 randomly selects a game outcome from a plurality of possible outcomes and causes the display 12, via the video circuitry 39 and video out 40, to depict indicia representative of the selected game outcome. Alternatively, the game outcome may be centrally determined at a remote computer using either a random number generator (RNG) or pooling schema. In the case of slots, for example, mechanical or simulated slot reels are rotated and stopped to place symbols on the reels in visual association with one or more pay lines. If the selected outcome is one of the winning outcomes defined by a pay table, the CPU 30 awards the player with a number of credits associated with the winning outcome.

The CPU 30 includes a microprocessor 32 and various memory devices (media devices). The microprocessor 32 interfaces with many other components of the gaming machine 10 via an interface bus 34. A main memory 36 stores the compiled gaming machine program for operating the gaming machine 10.

The main memory 36 may be DRAM or SRAM or substantially any other volatile memory device or reprogrammable non-volatile memory device. The battery backed memory 38 stores machine critical data that cannot be lost when power is removed from machine 10. The battery backed memory 38 may be battery backed volatile memory or a reprogrammable or rewritable non-volatile memory device. The video circuitry 39 supplies display information to a video display 12. The video display 12 may comprise a CRT, LCD, plasma, or other display device. Audio circuitry 42 generates sounds for game play on the gaming machine 10. The I/O control 44 controls input/output interfaces with the user interfaces such as game buttons 16, coin validators 14, touch screen bill validators, multimedia devices, etc.

In an exemplary embodiment, the various memory devices may also include a boot memory 46, a high capacity storage memory 48, and a serial read-write memory 50. The boot memory 46 is preferably a read-only memory such as a one megabit EPROM, EEPROM, PROM or other type of programmable read-only memory having an appropriate amount of storage space. The boot memory 46 may be substantially any type of non-volatile memory. The high capacity storage memory 48 is preferably a CompactFlash card, but may also be a hard disk drive, CD drive, DVD drive, magnetic RAM, battery backed RAM or other type of non-volatile memory. The serial memory 50 is preferably an EEPROM such as a 512 byte SPI EEPROM, but could be any type of programmable read-only or read/write non-volatile memory. Depending upon the preferences of the local gaming regulatory agency, all three memories may be adapted to be authenticated outside of the CPU as well as when initiated with the CPU at power up or prior to being utilized in the gaming machine.

The boot memory 46 stores, at least one or more of the following types of data being boot code 52, an authentication program 54, a RAM loader, a decompression utility 56, and a digital signature 58. The authentication program includes a hash function 60, a digital signature verification algorithm 62, and a public key 64. The hash function 60 may, for example, be an SHA-1 hash algorithm that reduces a data set to a unique 160 bit message digest. A hash algorithm or function is used to calculate a message digest corresponding to the files in, for example, a memory device. The message digest does not have to be unique, i.e., the function may return the same hash value for two or more items (although this is very unlikely). The non-uniqueness of the hash value for each item in the message digest is acceptable because each hash value is used to evaluate a different file or data set within a memory device. The message digest is a small representation of a large amount of data. A message digest is a relatively unique representation of data, from a cryptographic standpoint, and is an irreversible representation of the data. In other words, one cannot recreate the original data from the message digest.

The digital signature 58 is generated, in effect, from the boot memory's contents as a whole. In an exemplary embodiment, after hashing is performed to produce a message digest, then a digital signature is created to enable the origin and authenticity of the digest to be determined. When there is data that requires a means for determining the origin of the data, one generally uses a digital signature mechanism. There exists a federal standard called FIPS 186-2 that defines a digital signature generation and verification mechanism called the Digital Signature Algorithm (DSA). In an exemplary embodiment a digital signature is created from the message digest. In essence the DSA uses a private key, a public key, and the message digest. A private key and the message digest are used to create an original signature associated with the original message digest. The public key, the original signature, and a calculated message digest are used to check a signature associated with a message digest in order to determine the origin and authenticity of the data set. It is understood that neither the message digest nor the data or files used to create the message digest can be recreated using the DSA. The digital signature 58 is used to sign the message digest of the boot memory contents. Again, the signature may be used to determine the source or manufacturer of the message digest, via a public key, but cannot be used to recreate the message digest or the original data. Furthermore, the DSA is not being used here as an encryption process under FIPS 186-2, but rather a technique for validating the signature associated with the data set, and the public key.

The high capacity storage memory 48 stores game and operating system executable program files 66, sound operating system files 68, sound bank files 70, graphics files 72, a file list of file types 74, and digital signatures 76, 78. The files in the high capacity storage memory 48, taken together, constitute a "gaming program" as that term is used herein, and the various files constitute "data files" as that term is used herein. Thus, the gaming program includes a plurality of data files. For each data file on the high capacity storage memory 48, the manifest file contains a file name, a file type, a load address, and a file digital signature 76. The whole device digital signature 78 is generated from the gaming program as a whole, while each digital signature 76 is generated from the associated data file listed in the manifest file.

The serial read-write memory 50 stores information/data specific to the jurisdiction where the CPU is to be installed. This information may, for example, include a lottery terminal identification (ID) 80, a part number 82, a jurisdiction ID 84, a jurisdiction name 86, jurisdiction bit code options 88, jurisdiction max bet 90, jurisdiction max win 92, and a digital signature 94. The digital signature 94 is generated from the serial memory's contents as a whole.

The boot memory 46, serial read-write memory 50 and high capacity storage memory 48 may each be removable devices and/or contain alterable software. Each of these memory devices may be able to be reprogrammed or be able to receive downloaded updates from an outside source via a programming device, a network such as the Internet, an intranet, an Ethernet, a fibre loop, or other type of networking system. The boot memory 46, serial read-write memory 50, and high capacity memory 48 each may be required to be authenticated by the gaming machine 10 at various points during operation of the gaming machine.

In order to better understand the advantages of an exemplary run-time authentication algorithm, it is important to realize that as gaming machines evolved they began to use alterable media, such as flash memories, EEPROMs, EPROMs, CD drives, disk drives, etc. in their electronics and programming structure to store all or portions of the programs and files. Newer gaming machines are designed to allow the gaming software to be updated, to grow in size, and to grow in complexity. Because of these advances and changes in gaming machine design, electronics, software and memory storage size the time necessary to authenticate the software in the storage media during run-time operations has increased because the methods required to authenticate the software content became more complex. An increase in the time required to authenticate the software during machine run-time operations may affect the responsiveness and speed of the run-time software as well as the smoothness of operation to the extent that it is noticeable to the user. A CPU may become unable to effectively operate the gaming machine main program while multiplexing authentication processes are taking place due to the sheer size of the main program that must be authenticated within a predefined period of time. Thus, it is necessary to provide a technique to authenticate the gaming programs and media within various media devices without slowing or disturbing the operation of the gaming machine.

An exemplary run-time authentication comprises two main cycles of events during the operation of a gaming machine. The first cycle of events checks whether the high capacity storage memory 48 is connected to the bus 34. This check is performed at predetermined intervals that may range from about every 5 ms to about every minute. The first cycle also checks whether the high capacity storage memory's 48 SHA-1 message digest calculation is continuously being recalculated.

The second cycle of events performs a constant or continuous authentication of the boot memory 46, the serial read-write memory 50, the files that are being executed from the main memory 36, and the integrity of the data stored in the battery backed memory 38. Utilizing a SHA-1 hash message digest of a media device's contents the authentication of each media device is performed. The authentication of the media device during a run-time authentication may be limited to the data in the whole media device rather than the individual files stored in the media device. The authentication of a media device may also be performed file by file when the CPU has stored the memory locations and the type of data in the memory locations prior to an authentication process.

During a boot-up process of the CPU 30, the media devices and software thereon are normally authenticated. The boot-up authentication process includes performing a SHA-1 hash over the media software that is loaded into the main memory 36, authenticating the digital signature 58, 78, 94, and storing the calculated hash message digest in battery backed memory. Thus, during run-time authentication there is no requirement to perform signature verification since the files and components were proven to be authentic during the boot process. One main purpose of run-time authentication is so the CPU 30 can check to make sure that the files and data loaded into the main memory 36 during the boot process have not been altered. Another purpose of the run-time authentication is to verify that certain software or hardware components, such as the boot memory 46, the high capacity storage memory 48, or the serial read-write memory 50 have not been changed or undergone a change in any of their software/firmware. In order to check the executable code in main memory 36, the boot memory 46, the high capacity storage memory 48, or the serial read-write memory 50 for authenticity, only a SHA-1 hash, or its equivalent is necessary since all had been verified at boot-up to have come from a trusted source via a digital signature verification process. It is understood that there are various other techniques other than a SHA-1 hash function that could be used to verify the authenticity of the various media devices during run time. Such other techniques may include, but are not limited to, CRC-16, CRC-32, MD5 and checksum techniques.

As an additional run-time authentication and verification check, a digital signature verify operation is performed on the media devices (e.g., main memory 36, boot memory 46, high capacity storage memory 48, and serial read-write memory 50) when the gaming software returns from certain gaming events. These events are mainly security events wherein people have had access to the inside of the gaming machine or the gaming machine has made a large payout. The security events that may require an additional run-time verification and authentication check along with a digital signature verify operation include, but are not limited to:

Any "door closure event": On a gaming machine there may be various doors or hatches for providing access to the interior of the gaming machine. Anytime one of the doors or hatches is closed, the gaming program and other various media devices are checked for authenticity because someone may have had access to the interior of the gaming machine.

Any return to game play when exiting the "administration screen": Various gaming machines have an administration mode. There may be one or more levels for the administration mode. For example, one mode may include critical configuration settings affecting the payouts made by the gaming device and may require machine doors or hatches to be accessed to gain entry. Another mode may allow an administrator to view and verify meters, event logs, game playtime, machine statistics and other items benign to the functionality of the gaming device without unlocking any machine access doors or hatches.

Any return to game play from a "game disable" state: An attendant, a command from a host system, or other internal mechanisms can place the gaming machine in a game disable state in order to reserve the gaming machine for a certain player or for numerous other reasons. Essentially the gaming machine is on, but will not operate until it is taken out of the disabled state.

Any cashout handpay state: A cashout handpay is typical when a player would like to cash out of gaming machine and the amount of credit or winnings on the gaming machine is higher than the amount of coins or payout units in the gaming machine's hopper or higher than an operator configured machine payout limit. If this occurs, the gaming machine may go into a cashout handpay state wherein an attendant will have to come to the gaming machine and assist the player so that the player can get manually paid or handpaid. Once the cashout handpay is completed the attendant will use a key, card or other code or device to access the gaming machine and exit from the cashout handpay state.

Any Jackpot handpay state: A Jackpot handpay state is similar to the cashout handpay state, except the gaming machine is set to go into a Jackpot handpay state when a jackpot, hit by the player, is above a predetermined amount such as monetary amount that must be reported to Internal Revenue Service (IRS). When a jackpot of the predetermined amount or greater is hit then the machine locks up and an attendant is called to hand pay the player and further to have the player fill out the appropriate IRS (W-2G) form(s). The attendant can then use a key, card, pass code, or other appropriate means to reset the gaming machine into a play mode again.

After a successful verification of all files in main memory 36, the battery backed memory 38 is verified using, for example, a CRC check. The battery backed memory 38 can be set to store two copies of critical data -- a first copy that is stored as a master copy and a second copy that is stored as an auxiliary copy. The master copyprogram and auxiliary copy of the critical data can also be compared to each other to help ensure the integrity of the critical data being stored in the battery backed memory 38.

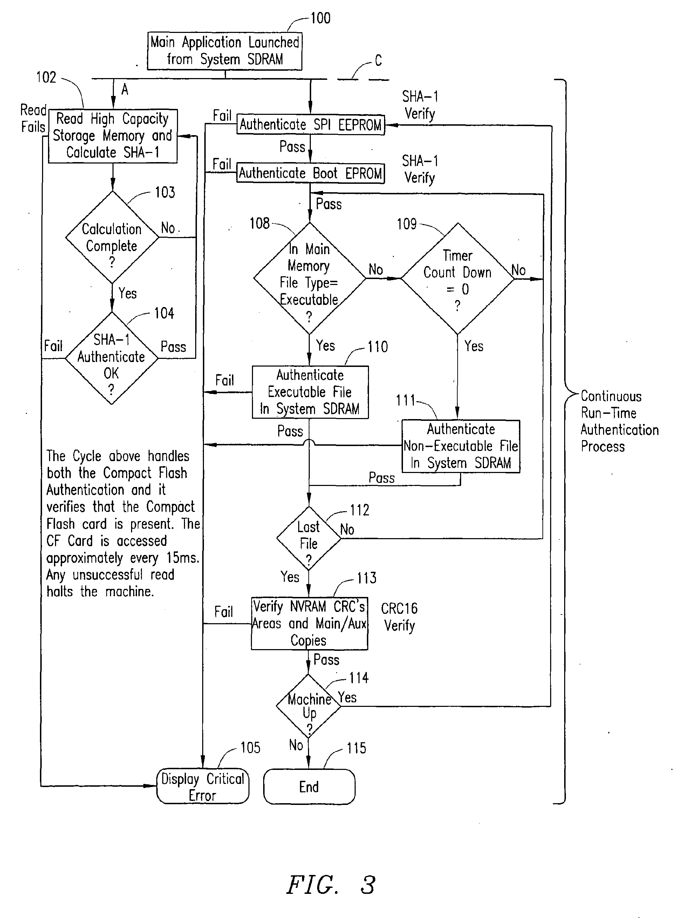

FIGURE 3 depicts a flow chart of an exemplary authentication process for continuous run-time authentication in accordance with an embodiment of the present invention. After boot-up of the gaming machine, wherein gaming machine program software or firmware was authenticated in at least one of a variety of accepted ways, and while the gaming machine is operational, the CPU 30 will, in conjunction with executing the gaming machine program, continuously authenticate the main memory 36, battery backed memory 38, boot memory 46, high capacity storage memory 48, the serial read-write memory 50 and any other memories that may require authentication. The CPU can be set to authenticate substantially any media device in the gaming machine or closely associated with the gaming machine throughout a network. The main application is launched at step 100 from the main memory 36. The gaming machine is operational and the authentication of predetermined media devices begins. From step 100, two authentication functionalities operate substantially in parallel as depicted by path A and path B. Path A authenticates the high capacity storage memory 48, and path B authenticates, in a serial fashion, the main memory 36, the battery backed memory 38, boot memory 46, and the serial read-write memory 50. The dotted line for path C indicates that other authentication processes may also take place in parallel with path A and B.

Discussing path A first, a predetermined amount of data is read from the high capacity storage memory 48 at step 102. Path A is separated from path B because the high capacity storage memory 48 may include a much larger amount of data then that which is found on path B. By separating the paths, all components on path B can be authenticated one or more times during the same amount of time it takes to authenticate the memory in path A. The predetermined amount of data may be a bit, a byte, a word or, for example, 1 bit to 1 Kbytes of data, or any amount of data that the architecture can handle in the time allotted for the function. The CPU processes the gaming machine program and performs the authentication functionalities in a time sharing manner. The percentage of sharing depends on how the sharing affects the gaming machine program's main application that interacts with a user while completing the authentication within a predetermined amount of time.

At step 102 the data that is read is used to calculate a hash message digest that is representative of the data. At step 103, the CPU determines whether all the data in the high capacity memory 48 has been read in order to determine if the hash calculation is complete. If all the data from the high capacity memory 48 has not been read, then the algorithm returns to step 102 to read more data and continue calculating the hash message digest. If at step 103 the hash calculation for all the data has been completed then, at step 104, the calculated hash message digest is compared with a previously stored hash message digest result for the data contents of the high capacity storage memory. The stored hash result may have been stored in one of the various non-volatile memories in the gaming machine. For example, the stored hash result may have been stored in a battery backed NVRAM 38 during boot-up. If the verification comparison indicates that the calculated hash message digest and the stored hash message digest are the same, then the high capacity memory is considered authenticated and the algorithm returns to step 102 and begins reading data from the high capacity storage memory 48 from the beginning (or from a predetermined data location) again. This loop continues for as long as the gaming machine is powered on. If the verification comparison fails, at step 104, due to the stored hash not being equal to the calculated hash, then a critical error is displayed, at step 105, on the gaming machine. The gaming machine then becomes non-functional or out-of-order until an attendant comes over the machine and determines what needs to be done to correct the error.

Ideally, the high capacity storage memory has the predetermined amount of data read from it about every 15 ms, but the data reading loop of path A may be substantially any amount of time, for example, from between 2 ms to once a day so long as the read takes place within the limitations of CPU. It is understood that in an exemplary embodiment of the present invention, the high capacity storage memory 48 is not the device from which code is executed. For example, the high capacity memory 48 may be a compact flash card, a hard drive or other type of non-volatile memory device that cannot be used to execute the gaming program. In many circumstances, the high capacity memory 48 may be hot-pluggable or hot-swappable with the gaming machine. As such, the run-time validation of the high capacity memory 48 also functions in various ways, such as a check or means for making sure the high capacity memory has not been removed, unplugged or partially disconnected from the gaming machine after boot-up.

Furthermore, the high capacity memory 48 may be a non-volatile memory capable of providing an executable program to the microprocessor 32. If this is so, an exemplary embodiment of the invention may not be required to have both a main memory 36 and a high capacity memory 48.

It should be noted again with respect to path A, that there might be more than one high capacity memory that must be authenticated. Path C (dotted line) represents an algorithm wherein one or more additional high capacity memories (or other media devices) are part of the CPU 30 in an exemplary gaming machine. The data in the additional memories may be authenticated via similar means and in parallel with paths A and B.

With respect to path B coming out of step 100, at step 106 data is read from the serial read-write memory 50 and a hash message digest is calculated from the bits. In the exemplary embodiment the serial read-write memory 50 contains significantly less data than the high capacity memory 48. Since there is significantly less data in the serial read-write memory 50 than the high capacity memory 48, the data in the entire memory can be read as a binary image so that a hash calculation can be performed. The hash calculation result is compared with a stored serial read-write memory hash message digest that was calculated at boot-up. If the two hash message digests do not match, then the algorithm indicates that the authentication failed and a critical error is displayed on the gaming machine at step 5. On the other hand, if the stored and calculated hash message digests match, then the serial read-write memory contents are considered validated and authentic.

At step 107, the boot memory's data is read and a hash message digest is calculated. The calculated boot memory hash is compared with a boot memory hash message digest that was stored at boot-up. If the hash message digests do not match, the fail path is taken to step 105 and a critical error is displayed on the gaming machine. If the hash message digests match, then the boot memory data.is validated. An additional step(s) could be placed here to validate any other memory associated with the CPU 30. These additional steps may be substantially the same as steps 106 and 107. Once steps 106 and 107 (and any other similar steps) are completed the algorithm goes to step 108. Either path A or B may have one or more authentication processes performed in a serial fashion.

In an exemplary embodiment of the present invention the main memory 36, or other memories (such as the battery backed memory 28 or possibly the high capacity memory 48) may contain both executable code along with graphics data. Executable code and graphics data may be compiled code or uncompiled code. When the gaming machine program (the game executable, operating system executable, and all graphics data) is compiled as a single compiled gaming machine program and stored in the main memory 36 (or other memories) the single compiled gaming machine program can be quite large and take a significant amount of time to authenticate when compared to the time required to authenticate, for example, the boot memory 46. Table 1 illustrates approximate authentication times of compiled or executable programs or files an embodiment of the present invention.

**Table 1**

| **Executable Program Size** | **Average Verification Time** |
|---|---|
| 1.5 MB | 1.9 minutes |
| 3.0 MB | 3.8 minutes |
| 4.5 MB | 5.7 minutes |
| 6.0 MB | 7.6 minutes |
| 7.5 MB | 9.5 minutes |
| 9.0 MB | 11.4 minutes |

If a first gaming machine has a gaming machine program in its main memory that is about 1.5 MB, then the authentication time is within a reasonable time frame of less than about 10 minutes. If a second gaming machine has a gaming machine program in its main memory that is greater than about 6.0 MB, then the time required to authenticate begins to become unacceptable due to gaming agencies requesting that the gaming software be authenticated about every 10 minutes while the gaming machine is powered on.

Assume that the main difference between the first and the second gaming machine is that there is more graphics data in the second gaming machine's gaming machine program. Then, it is understandable that if the compiled executable code in both gaming machines are about the same size (give or take a few megabytes), then a separation of executable code portions of the gaming machine program from the graphics data portions would decrease the time required to authenticate the second machine's compiled gaming machine program to about the same amount of time as the first machine's compiled gaming machine program. Furthermore, tampering with the executable data may be more harmful to a user of the gaming machine than tampering with the graphics data. This is because adjusting or tampering with the executable part of the program may affect the proper odds and payouts of the gaming machine. Wherein tampering with the graphics data may have the lesser effect of disturbing the gaming graphics or other multimedia experience. As such, in one embodiment of the present invention the graphics data is separated and left out of the authentication cycle. This may be acceptable because all the graphics data is called by the executable code, which is constantly authenticated. In another embodiment of the present invention, the graphics data is authenticated on a less frequent basis in order to offload the processor so that more time can be dedicated to authenticating the executable code files. For example, the graphics data in the main memory may only be authenticated from every other time the executable code is authenticated to once every hour, day, at predetermined intervals, or after a predetermined number of events. A timer or counter may be utilized to measure a predetermined number of events such as clock counts, cycles, up-counts, down counts, seconds, number of games played, number of users, etc.

Still looking at step 108 of FIGURE 3, an exemplary authentication algorithm begins to read data from the main memory (SDRAM) 36 and determined if the data being read is executable code or some another type of code such as graphics data. The determination of whether data is graphics data or executable code can be made prior to reading the data. Reading data and the determining whether the data is graphics data or executable code can take more time than already having loaded static memory addresses of indicating whether data in such static memory addresses is graphics data or executable code. As such, in embodiments of the present invention, static memory addresses are loaded into one of the volatile or non-volatile memories indicating where all the data is, for example, in the main memory 36 or the high capacity memory 28 and what type of data it is. In other exemplary embodiments of the present invention wherein data is dynamically loaded into a memory device, various exemplary methods can be utilized to identify the data locations and the data type. For example, a list indicating which memory locations are storing graphics data and which memory locations are storing executable code can be created and stored at the time the data is loaded into a memory device at boot-up during programming of the device, or any other time. Such a list allows the CPU to forego reading the data before making a type-of-data determination.

If the data read is executable code (e.g.), belongs to an executable file), then at step 110 a hash calculation is performed on the content of that executable file. The hash message digest is compared against the hash message digest that was stored in a non-volatile RAM at, for example, boot-up for the particular executable file. If the hash message digests do not match, then authentication fails and a critical error is displayed at step 105. If the signatures match and are verified, then the executable file is authenticated. At step 112 it is determined whether all the executable files in the main memory have been read. If all the files have not been read then the algorithm goes back to step 108 to read the next file or predetermined amount of data.

If the next file or predetermined amount of data that is read at step 108 is not executable code, then at step 109 a timer or counter is checked. If this is the first time through the algorithm loop, then the algorithm will automatically go from step 109 to step 111 wherein non-executable data or files (e.g., graphics data or files) are authenticated. If this is not the first time through the algorithm loop, then the timer, counter or countdown (hereinafter "timer") is checked to determine whether a predetermined amount of time (counts or number of events) have passed. If the predetermined amount of time had not passed, then the non-executable file is not authenticated at step 111 and the algorithm returns to step 108 to read the next file. If the timer has reached the predetermined amount of time (counts), then the graphics file is checked for authenticity via, for example, by comparing a calculated hash message digest with a previously stored hash message digest as discussed previously. If the non-executable file cannot be authenticated by the calculate-and-compare hashes method, then a critical error is displayed at step 105. If the non-executable file is authenticated by calculating a hash message digest and then comparing the calculated message digest with a stored message digest for the file, then the algorithm checks whether the last file in the main memory has been read at step 112. If the last file has not been read, then the algorithm returns to step 108 and reads the next file or predetermined amount of data. If the last file has been read from the main memory 36 at step 112, then the battery backed memory 38 is checked at step 113.

With respect to step 109, another exemplary embodiment may have a timer for each of the graphics data files so that the more critical graphics data files can be set to be checked more often than, for example, a non-critical graphics data file. Another exemplary reason for giving each graphics data file its own timer would be to stagger the authentication of the non-executable files in order to limit loading on the microprocessor 32.

The battery backed memory 38 is checked at step 113. In an exemplary embodiment a cyclic redundancy check (CRC) is performed on the nonvolatile RAM, battery backed memory 38. A CRC is a technique for detecting data changes or errors. A checksum or perhaps a hash calculation could also be used to authenticate the battery backed memory 38.

If the battery backed memory 38 is not determined to be authentic, then a critical error is displayed at step 105. If the battery backed memory 38 is authenticated, then the exemplary algorithm checks to make sure the machine is running at step 114. If the machine continues to be operational then the loop returns to step 106 wherein the authentication of data within the selected memory devices is repeated in a serial manner and substantially in parallel with the authentication of the high capacity memory 48.

In the above described embodiments of the present invention, just about every memory location of each media device is verified at start-up or during the operation of the gaming machine. As gaming machines incorporate more complex, and lengthier software, firmware or hardware, the need for even faster authentication continues to exist. For example, if an exemplary gaming machine incorporated a 32 megabyte compact flash card, then the SHA-1 algorithm would be performed using each one of the 32 million memory locations consecutively. After performing the SHA-1 calculation a number results. The number is compared with another number that was previously stored elsewhere in a memory device. If the numbers match, then the contents of the 32 megabyte compact flash card is authentic.

It takes several microseconds to read and run the SHA-1, calculation on each of the 32 million memory locations. As the media devices continue to grow in memory space, for example to 256 megabytes and beyond, the total time required to authenticate the software, firmware or hardware the various media devices also increases.

Thus, in another exemplary embodiment of the invention, the time required to authenticate the contents of one or more media devices is decreased by sampling the contents of a media device rather than reading each and substantially every location. For example, if every other memory location is sampled, rather than reading every memory location, the SHA-1 authentication calculation processes time reduced by about a half. If every third memory location is sampled, then the authentication calculation takes about one-third the time, and so on.

The order of the steps in the authentication algorithm may be changed to some degree without departing from an embodiment of the invention.

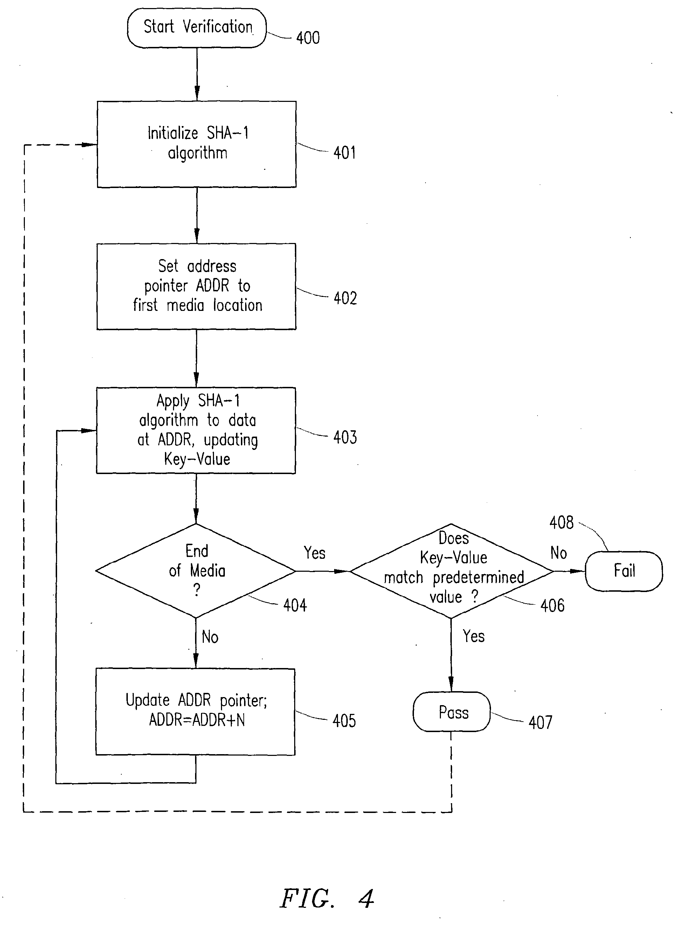

Referring now to FIGURE 4, step 400 is an entry point to the exemplary memory authentication sampling algorithm in accordance with the present invention. This memory authentication sampling algorithm may be utilized or incorporated into previously discussed embodiments, when a gaming machine is turned on or during operation. At step 401, a SHA-1 algorithm is initialized. An address pointer ADDR is set to the first memory location of the media storage device. For example, if the media storage device is a 32 megabyte compact flash storage device, the pointer is set to the first memory location of the media device at step 402. At step 403, the SHA-1 algorithm is applied to the data at the memory location and a key-value is updated with the new SHA-1 algorithm results.

Step 404 determines whether the memory location read was the last memory location in the media device. If the last memory location was not read, then an number N is added to the address pointer ADDR. N is generally an integer greater than 1. As such, instead of the address pointer pointing to the next memory location, it points to the next memory location plus some number of memory locations at step 105. For example, if N is equal to eight, instead of incrementing the address pointer by one and performing the SHA-1 algorithm on the contents of each and every memory location, the authentication algorithm performs the SHA-1 calculation and update of the key-value on every eighth memory location in the media storage device. If ADDR began by pointing at the first address location then as the process goes through steps 403, 404 and 405, memory locations 0, 8, 16, 24, and so on are read until the end of the address locations in the media device. This algorithm does not necessarily have to be performed in an absolute specific order. For example, steps 402 and 403 can be exchanged without deviating from the spirit of the invention.

When there are no more memory locations left to either skip over or read in the media device at step 404, then at step 406 a final key-value is calculated using the SHA-1 algorithm and compared with a predetermined value. If the final key-value matches the predetermined key-value, then the media device is considered authenticated at step 407. If the final key-value does not match the predetermined value then the media device is not authenticated and the gaming machine is halted.

This embodiment and other exemplary embodiments, can be run by the gaming machine as part of start-up and run-time routines. The embodiments can also be forced to run by an agent of the gaming commission or other authorized personnel.

This embodiment and the following exemplary embodiments, as well as derivations thereof can each operate in blocks 102, 103, 104 and 105 of FIGURE 3. One of ordinary skill in the art may also use the embodiment in any of the blocks 106, 107, 110, and 111. It is further understood that the address pointer may count down from the last memory location instead of counting up from the first. For example, ADDR may be equal to ADDR+N where N is equal to a positive or negative integer excluding -1, 0, and 1.

There are certainly maximum and minimum useful numbers to use for N. At N=zero this exemplary authentication algorithm does not work. At N=+/-1 the exemplary algorithm either counts up or down by one memory location.

As N becomes larger (i.e., N=8, 9,...40, 41, 42...etc), the exemplary sampled verification authentication technique provides a lower probability that the gaming software being authenticated is in fact authentic. For example, if N is set to eight, there are only seven memory locations between each memory location read, which never get sampled. Furthermore, if N is set to 100, then there are 99 memory locations between each memory location that is checked that are not being checked for authenticity thereby establishing a possibility that the stored data might have gotten changed somehow.

It should be understood that memory locations are usually bytes of memory, but could be words or any number of memory bits as well. Thus, the level of security confidence or authentication confidence is set by N. If N is equal to three the level of confidence one has in the code being authentic is much higher than if N is equal to a large number like 1000, or 10K. At higher Ns there is more room for code to have been changed, altered or lost within the media device and never be checked authenticated as being the originally installed or authenticated code.

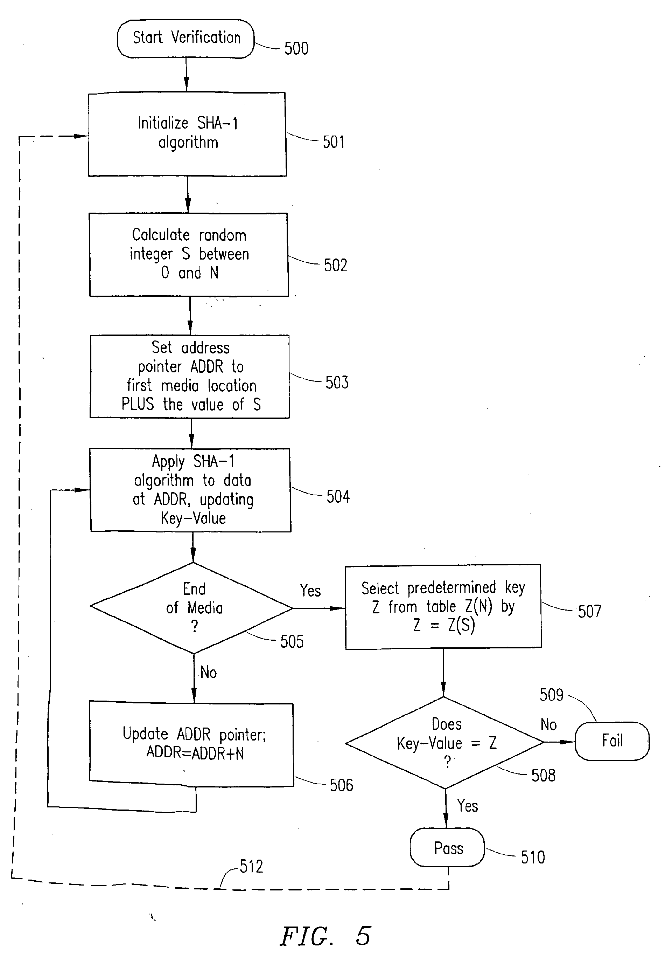

In yet another embodiment of the sampled verification invention, the first bit to be read by the SHA-1 algorithm is a randomized number S, where S is an integer from 0 to N-1. In other words, for a given N, the largest value for S is equal to N-1. N is equal to the number added to ADDR so as to determine the next memory location to be read and included in a SHA-1 calculation. In FIGURE 5 the exemplary authentication process is entered at step 500. The SHA-1 algorithm is initialized at step 501. At step 502, a number S is calculated. S is a random number from 0 to N-1 and is calculated via any one of the many random number generator algorithms.

At step 503 the address pointer ADDR is set to point to the first media memory location plus the value S. For example, if N was set to eight, as in the previously described exemplary embodiment, and S is randomly calculated to three, then the first location that is read in the media device is the start memory location plus three.

At step 504 the SHA-1 algorithm is applied to the data in the read memory location. The key-value is updated with the new SHA-1 algorithm results. It is then determined whether the ADDR pointer is at or beyond the end of the media at step 505. If the pointer is not pointing at or beyond the end of the media device's memory locations, then the address pointer is incremented by N such that ADDR=ADDR+N at step 506. For example, if the address pointer begins by pointing at the third memory location and N is equal to 8, then the next ADDR value is eleven, then nineteen, then twenty-seven, then thirty-five, and so forth until ADDR is equal to a number greater or equal to the total number of memory locations in the media device.

In other embodiments of the present invention, ADDR may count down instead of count up through the memory locations. Also, the starting memory address may not be the first address of the media device and the ending memory address may not be the last memory location in the media device. The starting and ending memory addresses may be a predetermined portion of the media device that requires authentication instead of the entire media device.

If at step 505, it is determined that the ADDR is at or beyond the maximum or end of the memory locations to be authenticated, then the "yes" branch of step 505 is taken. Furthermore, it is understood that the exact order of the flow chart may be changed without deviating from other embodiments of the invention. For example, steps 504 and 505 may be interchanged. An array of keys Z(N,S) would be stored in the gaming device for comparison with the calculated SHA-1 key-value result.

At step 507, a predetermined key Z is selected from a table for Z(N) by Z=Z(s). The Z(N) table is established to support the S possible starting points for any value of N. Thus, using our example of N=8 and S equal to a randomly chosen integer from 0 and 7 there must be a table Z(N) with eight keys, Z=Z(S). The keys, Z(S), are all calculated during the manufacturing process of the gaming machine. There are N precalculated keys, one for each value of S from 0 to N-1. The keys are precalculated values of the SHA-1 algorithm for each possible Z(S).

Prior to step 502, the number N can be randomized between 0 and a preselected integer that is less than the total number of memory locations that are to be authenticated in the media device. Thus, N can also vary each time the loop 512 is taken. The randomization of N can be part of step 501 wherein the SHA-1 algorithm is initialized.

At step 508, it is determined whether the SHA-1 algorithm last applied at step 505 provided a key-value equals the key, Z(S), for the randomly selected number S. If the key Z(S) and the key-value are not equal, the authentication process fails at step 509. If the key Z(S) is equal to the key-value then the contents of the media device is authenticated and passes at step 510.

If the authentication process is a repeating process or a continuous run-time authentication process as discussed in FIGURE 3, the dashed path 512 of FIGURE 5 can be followed so that the SHA-1 algorithm is reinitialized at step 501 and a new random number between 0 and N-1 is calculated. In this manner, over time each and every bit, byte, word or memory location is authenticated as the repeating, continuous run-time authentication process continues. Each time the authentication process loop is performed it is performed N times faster than if each and every memory location in the media device was read. Furthermore, if N is kept small enough, from about 2 to 32, or if N is kept to a number less than about one quarter (1/4) the number of memory locations in the media device that are being authenticated, there is a high probability that the contents of the media device is authentic each time the authentication loop is executed. Also each pass through the loop takes substantially the same amount of time.

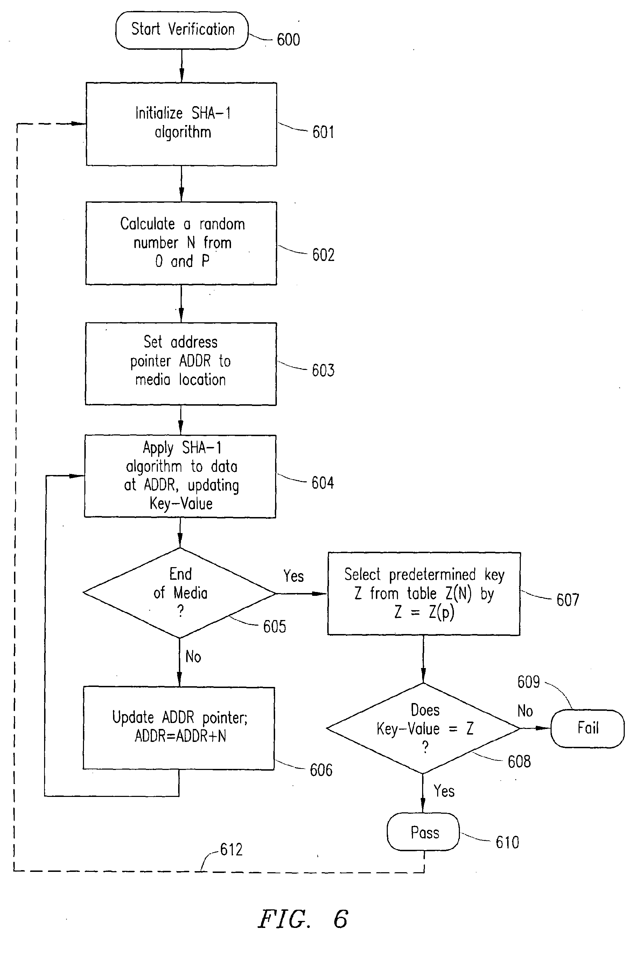

Another embodiment of the present invention operates similarly to both FIGURE 4 and 5, but N is selected from a random number between zero and a predetermined number P. Referring now to FIGURE 6, the verification process is entered and initialized at steps 600 and 601. A random number N, from zero to P is calculated wherein N is an integer and P is preferably equal to a number that is less than one half the number of memory locations in the portion of the media device being authenticated. More preferably P is equal to a number that is less than about 32.

At step 603 the address pointer ADDR is set to media location N. Steps 604, 605 and 606 are substantially similar to steps 504, 505 and 506 of FIGURE 5. The loop 604, 605 and 606 is completed when ADDR is equal to a number that is greater than or equal to the end of the media's memory locations being authenticated.

At step 607, a predetermined key-value Z is selected from a table of P precalculated Z values Z=Z(P). At step 608, it is determined if the newly calculated key-value is equal to the key Z(P). If the newly SHA-1 algorithm, calculated key-value is not equal to the predetermined key Z(P), then the authentication fails at step 609. If they are equal then the media is considered authenticated at 610.

The dashed path 612 is taken for continuous run time authentication situations wherein all or portions of a media device is continuously authenticated over and over while the gaming machine is operational. Path 612 goes back to step 601 wherein the SHA-1 algorithm is reinitialized and at step 602 another random number N is calculated from 0 to P.

In this embodiment of an authentication method and apparatus, the authentication process takes various amounts of time depending on the calculated random number N. The larger N is the less time it takes for the SHA-1 algorithm calculation loop 604, 605, 606 to calculate a new key-value. The converse is true for small values of N.

After multiple passes through the repeating loop 612, each and every memory location in the portion of the media device to be authenticated, will have been used in a SHA-1 algorithm. Thus, there is also a high probability that each pass 610 through the authentication process results in an authentic media device. It is also understood that the exact order of the steps shown in FIGURE 6 can be deviated from without deviating from embodiments of the invention.

While the present invention has been described with reference to one or more particular embodiments, those skilled in the art will recognize that many changes may be made thereto without departing from the spirit and scope of the present invention. Each of these embodiments and obvious variations thereof is contemplated as falling within the spirit and scope of the claimed invention, which is set forth in the following claims.

The previous description is of a preferred embodiment for implementing the invention, and the scope of the invention should not necessarily be limited by this description. The scope of the present invention is instead defined by the following claims.

## Claims

1. In a gaming machine, a method of authenticating a media device comprising:
setting an address pointer ADDR to a first next memory location in said media device; .
determining whether said next memory location is a last memory location to be authenticated in said media device;
applying a hashing algorithm to the contents of said next memory location and updating a key-value;
adding a predetermined number N to said ADDR such that the next ADDR = ADDR+N;
setting the next ADDR to the next memory location in the media device to be authenticated;
repeating the determining, applying, adding and setting steps until the next ADDR is equal to said last memory location;
determining whether said key-value is equal to a predetermined key;
passing authentication if said key-value is equal to said predetermined key,
failing authentication if said key-value is not equal to said predetermined key.

2. The gaming machine utilizing the method of claim 1, wherein said first next memory location is a first memory location of said media device.

3. The gaming machine utilizing the method of claim 1, wherein said last memory location is not the last memory location of said media device.

4. The gaming machine utilizing the method of claim 1, further comprising:
calculating a random number S, wherein S is an integer from 0 to N; and
adding S to N such that N=S+N prior to setting said address pointer ADDR to the first next memory location in said media device.

5. The gaming machine utilizing the method of claim 4, wherein said predetermined key is equal to Z(S), such that Z(S) is equal to one of S predetermined keys.

6. The gaming machine utilizing the method of claim 5, wherein Z(S) is calculated and stored prior to a first time the gaming machine is authenticated.

7. The gaming machine utilizing the method of claim 1, wherein the predetermined key is calculated and stored prior to a first time said gaming machine is authenticated.

8. The gaming machine utilizing the method of claim 1, further comprising:
calculating said predetermined number N such that N is equal to a number from 1 to P, wherein P is less than a number of memory locations in said media device to be authenticated; and
wherein said setting said address pointer ADDR to a first next memory location in said media device comprises setting ADDR to N.

9. The gaming machine utilizing the method of claim 8, wherein said predetermined key is equal Z(P) such that Z(P) is equal to one of P predetermined keys

10. The gaming machine utilizing the method of claim 9, wherein Z(P) is calculated prior to a first authentication of said gaming machine.

11. The gaming machine utilizing the method of claim 1, wherein said hashing algorithm is a SHA-1 algorithm.

12. The gaming machine utilizing the method of claim 1 further comprising resetting said address pointer ADDR to said first next memory location in said media device after passing authentication such that said method repeats continuously until said media devices fails authentication or said gaming device is turned off.

13. A gaming machine comprising:
a user interface; and
a central processing unit (CPU) coupled to said user interface, said CPU comprising:
a processor;
a first media device coupled to said processor, said first media device adaptable to store data in a plurality of memory locations;
a second memory coupled to said processor, said second memory adapted to contain executable program code, said executable program code further comprises a plurality of instructions configured to cause said processor to determine the authenticity of said data in said plurality of memory locations, said instructions include instructions for:
performing a hash calculation on a sample of memory locations from said plurality of memory locations and calculating a key-value from said sample of memory locations; said sample of memory locations being a number of memory locations that is less than said plurality of memory locations;
comparing said key-value to a predetermined key;
authenticating said data stored in said plurality of memory locations if said key-value is equal to said predetermined key; and
not authenticating said data stored in said plurality of memory locations if said key-value is not equal to said predetermined key.

14. The gaming machine of claim 13 wherein each one of the memory locations in said sample of memory locations are separated by N memory locations.

15. The gaming machine of claim 14, wherein said instructions further include instructions for selecting the number N from a random number between zero and the number of memory locations in said plurality of memory locations.

16. The gaming machine of claim 14, wherein the number of memory locations in said plurality of memory locations is equal to the total number of memory locations in said first media device.

17. In a gaming machine that is turned on, a method of repeatedly authenticating a portion of a media device, said method comprising:
reading a plurality of memory locations in said media device wherein said plurality of memory locations are spaced from each other, said plurality of memory locations being less than a total number of memory locations in said media device;
after reading each memory location, calculating a hash value and using said hash value to update a key-value until all said plurality of memory locations are read and a final key-value is determined;
comparing said final key-value to a predetermined key;
passing said portion of said media device as authentic if said final key-value is equal to said predetermined key and repeating said reading, calculating and comparing steps;
failing said predetermined portion of said media device as authentic if said final key-value is not equal to said predetermined key and halting operation of said gaming machine.

18. The method of claim 17, wherein said portion of said media device is equal to all the memory locations in said media device.

19. The method of claim 17, wherein said plurality of memory locations are equally spaced from each other.

20. The method of claim 17, wherein said plurality of memory locations are equally spaced from each other by a number N, such that N is randomly selected each time the step of reading is performed, N is equal to a number that is less than the total number of memory locations in said media device

21. The method of claim 20, wherein N is randomly selected from an number that is less than 20.

22. The method of claim 17, wherein said plurality of memory locations are equally spaced from each other and the first memory location read is a random number S from a first possible memory location that can be read.

23. The method of claim 22, wherein S is recalculated prior to said reading step.
